(19) Europäisches Patentamt
European Patent Office
Office européen des brevets

(11) **EP 3 177 526 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(21) Anmeldenummer: **15745457.0**

(22) Anmeldetag: **30.07.2015**

(51) Int Cl.:
**B64C 27/02** *(2006.01)*     **B64C 27/64** *(2006.01)*

(86) Internationale Anmeldenummer:
**PCT/EP2015/067567**

(87) Internationale Veröffentlichungsnummer:
**WO 2016/020268 (11.02.2016 Gazette 2016/06)**

(54) **TRAGSCHRAUBER**

AUTOGYRO

AUTOGIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2014 DE 102014011441**

(43) Veröffentlichungstag der Anmeldung:
**14.06.2017 Patentblatt 2017/24**

(73) Patentinhaber: **AutoGyro AG**
**9100 Herisau (CH)**

(72) Erfinder: **BIRKNER, Otmar**
**31137 Hildesheim (DE)**

(74) Vertreter: **Lins, Martina**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
**DE-A1-102009 015 806     GB-A- 2 276 958**
**GB-A- 2 280 412     US-A1- 2004 232 280**
**US-B1- 7 490 792**

**Beschreibung**

Die Erfindung betrifft einen Tragschrauber gemäß dem Oberbegriff von Anspruch 1. Nachteilig an bekannten Tragschraubern ist deren häufig als zu niedrig empfundene Spitzengeschwindigkeit. Es ist ein weiterer Nachteil bekannter Tragschrauber, dass Pilotenfehler oder externe Einflüsse zu Oszillation in der Lage des Flugzeugs führen können, die ein Sicherheitsrisiko darstellen.

Aus der DE 10 2009 040 278 A1 und der DE 10 2009 015 806 A1 sind Tragschrauber bekannt. Aussagen zur Art der Trimmung enthalten die Druckschriften nicht.

Aus der US 2004/0232280 A1 ist ein Kombinations-Flugzeug bekannt, das bei niedrigen Fluggeschwindigkeiten wie ein Helikopter oder ein Tragschrauber funktioniert und bei hohen Geschwindigkeiten den Auftrieb über starre Tragflügel bereitstellt. Zur Dämpfung von Schwingungen des Hauptrotors wird ein pneumatisches Dämpfungssystem vorgeschlagen. Auf piloteninduzierte Oszillationen geht die Druckschrift nicht ein. Aus der US 7,490,792 B1 ist ein weiteres Dämpfsystem für ein derartiges Fluggerät bekannt. Piloteninduzierte Oszillationen werden in der Druckschrift nicht diskutiert.

Die DE 10 2009 015 806 A1 beschreibt einen Tragschrauber, der einen Pneumatikzylinder zum Dämpfen von Auf- und Ab-Bewegungen des Rotors aufweist. Zum Steuern kann ein Hydraulikzylinder vorgesehen sein, mittels dem die Steuerkraft vom Steuerknüppel auf die Rotorkopfbrücke übertragen wird.

Aus der GB 2 280 412 A und der GB 2 276 958 A sind Dämpfungsvorrichtungen für den Rotor eines Helikopters, die auftretende Vibrationen aktiv dämpfen. Ein derartiges System ist für Tragschrauber nur schlecht geeignet.

Der Erfindung liegt die Aufgabe zugrunde, einen Tragschrauber vorzuschlagen, bei dem fremd- und/oder piloteninduzierte Schwankungen unwahrscheinlicher sind.

Die Erfindung löst das Problem durch einen Tragschrauber mit den Merkmalen von Anspruch 1.

Vorteilhaft an einem derartigen Tragschrauber ist, dass er gutmütiger auf fremdinduzierte und/oder piloteninduzierte Schwankungen in der Fluglage reagiert. Bei einem Tragschrauber sind die Rotorblätter so an der Rotorkopfbrücke befestigt, dass beim Geradeausflug ein Nickmoment auf die Rotorkopfbrücke wirkt, das den Rotor in einen kleineren Neigungswinkel drückt. In anderen Worten sind die Rotorblätter so angeordnet, dass ohne Einwirken einer externen Kraft auf die Rotorkopfbrücke sich der Rotor selbsttätig in die Lage bewegt, in der der Tragschrauber schneller fliegt. Der Pilot muss daher, sofern keine Trimmung existiert, den Steuerknüppel beständig leicht zu sich heranziehen, um die Geschwindigkeit zu halten.

Im Stand der Technik ist daher eine Gasdruckfeder bekannt, die eine Trimmkraft auf den Rotor aufbringt, sodass der Pilot diese Kraft nicht aufbringen muss. Die Gasdruckfeder ist meistens so angeordnet, dass der Tragschrauber nicht schneller fliegt, wenn der Pilot den Steuerknüppel loslässt, sondern seine Geschwindigkeit hält.

Hebt sich die Nase des Tragschraubers, beispielsweise durch eine Änderung der Windverhältnisse oder durch einen Steuereingriff des Piloten, so vergrößert sich der Hub des Pneumatikzylinders. Besitzt der Pneumatikzylinder eine Kolbenstangen, so ragt diese in anderen Worten weiter aus dem Zylinder heraus. Dadurch erhöht sich die Rückstellkraft der Gasdruckfeder. Der Rotor wird dadurch von der Gasdruckfeder zu einem größeren Neigungswinkel gezogen. Dadurch sinkt die Fluggeschwindigkeit des Tragschraubers. Durch diese Verringerung der Fluggeschwindigkeit schwingt die Nase weiter nach oben, bis ein rückstellendes Drehmoment zu einem Rückschwingen der Nase nach unten führt. Das rückstellende Drehmoment entsteht, weil sich der Schwerpunkt des Tragschraubers relativ zum Rotor nach vorne verschoben hat. Dadurch beginnt die Nase, wieder nach zurück zu schwingen.

Schwingt die Nase wieder nach unten, so verringert sich der Hub des Pneumatikzylinders und seine Federkraft nimmt ab. Dadurch verringert sich der Neigungswinkel, die Geschwindigkeit des Tragschraubers nimmt zu und die Rückschwingbewegung der Nase nach unten wird daher verstärkt. Die Nase schwenkt nach unten, bis das nun rückstellende Drehmoment zu einer erneuten Bewegung der Nase nach oben führt, wobei diese Bewegung stärker ist. Es kann daher zu einer sich selbst verstärkenden Auf- und Abbewegung der Nase des Tragschraubers relativ zum Rotor kommen.

Wegen der hohen Trägheitskräfte und einer gewissen Eigendämpfung der Schwingungen des Tragschraubers relativ zur Rotorkopfbrücke, sind solche Schwankungen in der Fluglage in der Regel harmlos, sofern sie nicht vom Piloten unbeabsichtigt durch prozyklisches Gegensteuern verstärkt werden. Es kann dann zu pilot-induzierten Oszillationen kommen, die auch als PIO (pilot induced oscillation, englisch: piloten-verursachte Oszillationen) kommen, die im schlimmsten Fall zum Absturz des Tragschraubers führen.

Durch den Gasspeicher ist die Kraft der Gasdruckfeder wenig vom Hub der Gasdruckfeder abhängig. Der Effekt der positiven Rückkopplung, der wie oben beschrieben von der hubabhängigen Rückstellkraft der Gasfeder verursacht wird, wird so deutlich reduziert. Die Erfindung führt daher zu einer geringeren Neigung zu Oszillationen. Das gilt sowohl für fremdinduzierte als auch für piloteninduzierte Oszillationen.

Da der oben beschriebene Effekt bei einer hohen Fluggeschwindigkeit deutlich ausgeprägter ist als bei einer niedrigen Fluggeschwindigkeit, muss eine Höchstgeschwindigkeit vorgegeben werden. Da ein erfindungsgemäßer Tragschrauber weniger zu Oszillationen neigt, kann die maximal zulässige Geschwindigkeit größer gewählt werden.

Im Rahmen der vorliegenden Beschreibung wird unter dem Rotor der in einer annähernd horizontal verlaufenden Ebene rotierende Rotor verstanden. Der Tragschrauber besitzt zudem in aller Regel einen Propeller, der den Schub nach vorne erzeugt. Wie bei allen Tragschraubern ist der Rotor im Flug nicht mit einem Motor verbunden, sondern dreht passiv im Wind.

Unter der Gasdruckfeder wird insbesondere eine Vorrichtung verstanden, bei der der Druck eines Gases dazu verwendet wird, um eine Kraft zu erzeugen. Unter dem Merkmal, dass die Gasdruckfeder zum Trimmen des Rotors angeordnet ist, wird insbesondere verstanden, dass die Gasdruckfeder so angeordnet ist, dass die die Kraft vermindert, die der Pilot bei Reisefluggeschwindigkeit geradeaus auf den Steuerknüppel ausüben muss.

Unter dem Merkmal, dass der Gasspeicher mit der Gasdruckfeder verbunden ist, wird insbesondere verstanden, dass der Gasdruck im Gasspeicher über eine Verbindung zu einem Zylinder der Gasdruckfeder geleitet wird, so dass es zu einem Druckausgleich kommt.

Die Gasdruckfeder ist zum Trimmen des Hauptrotors um seine Querachse angeordnet. In anderen Worten ist die Gasdruckfeder so angeordnet, dass sie ein Nickmoment auf die Rotorkopfbrücke aufbringt. Die Rotorkopfbrücke ist der Teil des Rotorskopfes, an dem der Rotor befestigt ist und der über eine Quer zur Längsachse verlaufende Achse mit dem unteren Teil des Rotorkopfs verbunden ist.

Vorzugsweise besitzt die Gasdruckfeder einen Zylinder, einen Kolben, der im Zylinder läuft und im Zylinder ein oberes Teilvolumen und ein unteres Teilvolumen voneinander trennt, und eine Kolbenstange, die am Kolben befestigt ist, wobei der Gasspeicher so mit der Gasdruckfeder verbunden ist, dass der Gasspeicher mit dem oberen Teilvolumen, nicht aber mit dem unteren Teilvolumen kommuniziert. Bewegt sich die Kolbenstange nach oben relativ zum Zylinder, so wird Gas aus dem oberen Teilvolumen in den Gasspeicher verdrängt. Es kommt dadurch zu einer Druckerhöhung im Gasbehälter, die aber deutlich kleiner ausfällt als die Druckerhöhung, die ohne den Gasspeicher eintreten würde.

Vorzugsweise besitzt die Gasfeder ein Federvolumen und der Gasspeicher hat ein Speichervolumen, wobei das Speichervolumen größer ist als ein Fünftel des Federvolumens, insbesondere größer als das Federvolumen. Das Federvolumen ist das Produkt aus dem Hub und der Zylinderinnenfläche. Die Zylinderinnenfläche ist der Flächeninhalt des Querschnitts des Zylinders. Der Hub ist die Differenz zwischen der Position des Kolbens bei minimaler Auslenkung und der Position des Kolbens bei maximaler Auslenkung, jeweils gemessen entlang der Zylinderlängsachse. Im Folgenden wird gezeigt, wie das Verhältnis zwischen Speichervolumen und Federvolumen die Abhängigkeit der Federkraft, die die Druckfeder aufbringt, vom Hub beeinflusst.

Zunächst sei der Hub $H = H_1$ und es herrsche in der Gasdruckfeder ein Federdruck $p_1$.

Ein Gesamt-Volumen $V_{ges}$ des Gasfedersystems aus Gasspeicher und Gasdruckfeder berechnet sich aus dem Federvolumen $V_F$ und dem Speichervolumen $V_S$ zu

$$V_{ges} = V_F + V_S.$$  Formel 1

Als Gasspeicher werden alle Komponenten des Gasfedersystems verstanden, die nicht Teil der Gasdruckfeder sind. Es ist möglich und vorteilhaft, wenn der Gasspeicher einen Gasbehälter und Leitungen, die den Gasbehälter mit der Gasdruckfeder verbinden, umfasst.

Wenn der Kolben der Gasdruckfeder um $\Delta h = H_2 - H_1$ ausgezogen wird, sich der Hub also von $H_1$ auf H2 ändert, verdrängt der Kolben ein zusätzliches Gasvolumen $\Delta hA$. Darin ist A der Flächeninhalt des Innenquerschnitts des Zylinders, die auch Zylinderinnenfläche genannt werden kann. Es stellt sich ein Druck $p_2$ ein, für den gilt:

$$p_1 V_{ges} = p_1 \left( V_F + V_S \right) = p_2 V_2 = p_2 \left( V_F + V_S - \Delta hA \right)$$  Formel 2

Es ergibt sich

$$p_1 \frac{(V_F + V_S)}{(V_F + V_S - \Delta hA)} = p_2 \qquad\qquad \text{Formel 3}$$

$$\Leftrightarrow$$

$$p_2 = p_1 \frac{1}{\left(1 - \dfrac{\Delta hA}{V_{ges}}\right)} = p_1 + \frac{\Delta hA}{V_{ges}} p_1 + O\left[\left(\frac{\Delta hA}{V_{ges}}\right)^2\right] p_1$$

O bezeichnet einen Term der Ordnung $\left(\dfrac{\Delta hA}{V_{ges}}\right)^2$ der in guter Näherung vernachlässigbar ist. Der Federdruck steigt also in erster Näherung um $\dfrac{A}{V_{ges}} p_1 \Delta h$ an. Je kleiner der Quotient $\dfrac{A}{V_{ges}}$ ist, desto geringer ist der Federdruckanstieg.

Vorzugsweise beträgt das Speichervolumen zumindest das Fünffache, insbesondere das Zehnfache, des Federvolumens. Wie die obere Rechnung zeigt, führt ein großes Speichervolumen dazu, dass die Kraft der Gasdruckfeder besonders wenig vom Hub abhängt. Der Größe des Gasbehälters sind jedoch konstruktive Grenzen gesetzt.

Vorzugsweise umfasst der Gasspeicher einen Gasbehälter mit einem Gasbehältervolumen, das größer ist als das Federvolumen, insbesondere größer als das Fünffache des Federvolumens. Besonders günstig ist es, wenn der Gasbehälter ein Kunststoffbehälter ist. Derartige Kunststoffbehälter sind leicht und wiesen trotzdem eine hohe Druckfestigkeit auf. Günstig ist es, wenn der Kunststoffbehälter zumindest bis 0,6 MPa, insbesondere bis 1,0 MPa, druckfest ist.

Es kann vorteilhaft sein, den Gasbehälter innerhalb einer Verkleidung des Tragschraubers anzuordnen. Er ist dann gegen äußere Einwirkungen geschützt. Beispielsweise schirmt die Verkleidung Sonnenstahlen ab, sodass der Gasbehälter weniger thermisch bedingte Druckschwankungen zeigt.

Vorzugsweise umfasst der Tragschrauber eine Druckeinstellvorrichtung, mittels der der Federdruck in der Gasdruckfeder einstellbar ist. So kann der Pilot auch während des Fluges den Federdruck ändern und die Trimmung anpassen.

Günstig ist es, wenn die Druckeinstellvorrichtung eine Druckgasquelle umfasst, insbesondere einen Kompressor zum Erzeugen von Druckluft, die zum Einstellen eines Federdrucks in der Gasfeder mit der Gasdruckfeder zumindest mittelbar verbunden ist. In anderen Worten ist die Druckgasquelle, insbesondere der Kompressor, so angeordnet, dass mit ihrer Hilfe der Federdruck änderbar ist. Beispielsweise ist es möglich, dass die Druckgasquelle, wie beispielsweise der Kompressor, mit dem Gasspeicher verbunden ist.

Im Folgenden wird die Erfindung anhand der beigefügten Zeichnungen näher erläutert. Dabei zeigt

Figur 1    eine maßstabsgetreue schematische Darstellung eines erfindungsgemäßen Tragschraubers und

Figur 2    eine dreidimensionale Ansicht eines Rotorkopfs des Tragschraubers gemäß Figur 1.

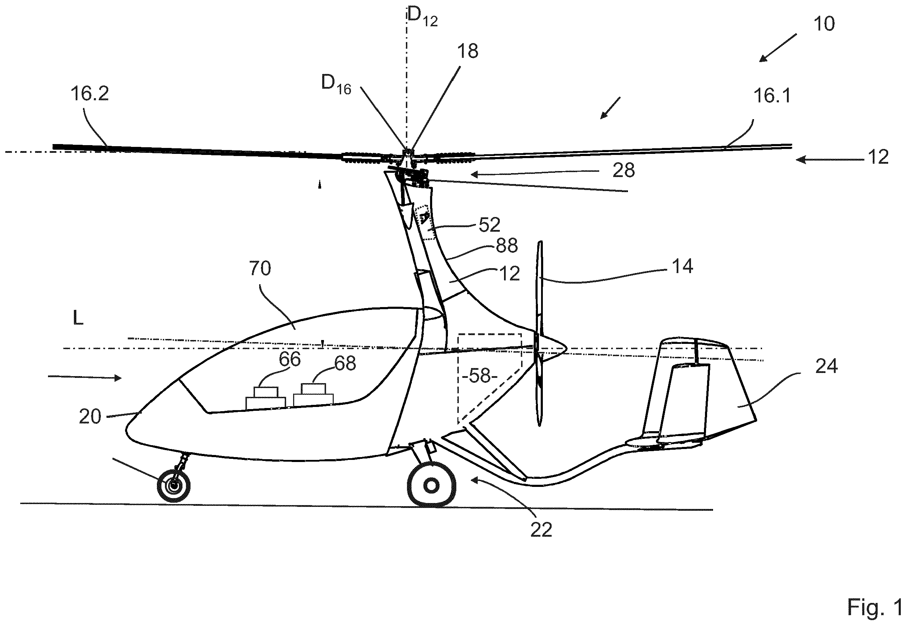

Figur 1 zeigt einen Tragschrauber 10 mit einem Rotor 12 und einem Propeller 14. Der Rotor 12 besitzt zwei Rotorblätter 16.1, 16.2, die um eine Rotorblatt-Drehachse $D_{16}$ an einem Teeter-Tower 18 befestigt sind. Der Tragschrauber 10 besitzt einen Rumpf 20, ein Fahrwerk 22 und ein Heckleitwert 24.

In Figur 1 bilden die Rotorblätter 16.1, 16.2 einen Neigungswinkel v = 0° mit der Horizontalen H. In diesem Fall verläuft eine Rotor-Drehachse $D_{12}$ streng vertikal. Eingezeichnet ist zudem eine Längsachse L des Tragschraubers.

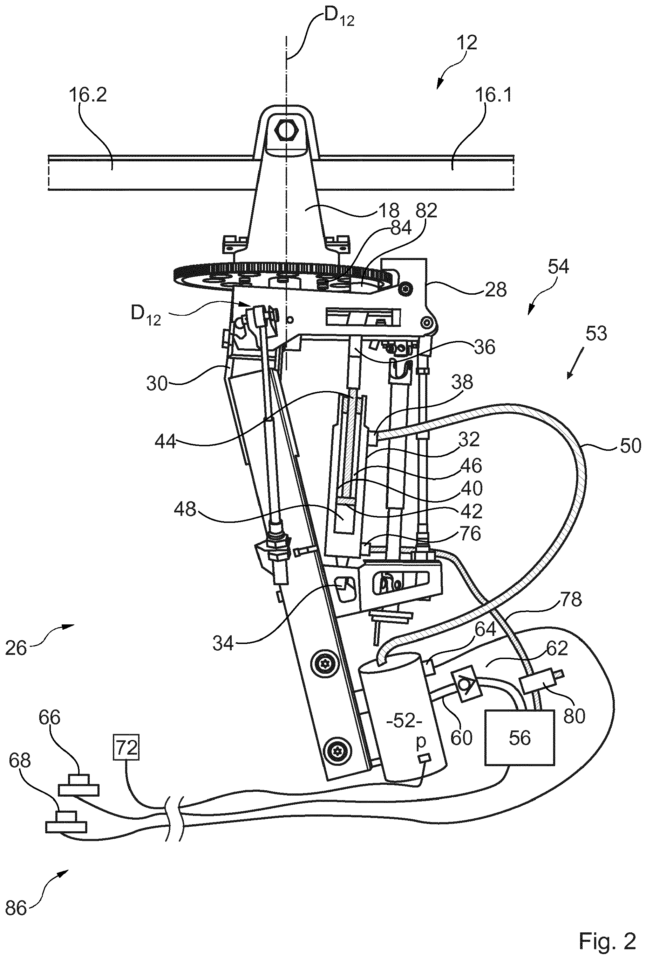

Figur 2 zeigt einen Rotorkopf 26 des Tragschraubers 10 (siehe Figur 1). Der Rotorkopf 26 umfasst eine Rotorkopfbrücke 28, die um die Rotor-Drehachse $D_{12}$ drehbar an einer Rotorkopfbasis 30 befestigt ist. Es ist zu erkennen, dass die Rotorblätter 16.1, 16.2, die zusammen den Rotor bilden, am Teeter-Tower 18 befestigt sind. Der Teeter-Tower 18 ist um die Rotor-Drehachse $D_{12}$ drehbar an der Rotorkopfbrücke 28 befestigt.

Der Tragschrauber umfasst eine Gasdruckfeder 32, die mit einem rumpfseitigen Ende 34 an der Rotorkopfbasis 30 befestigt ist. Mit einem rotorseitigen Ende 36, das dem rumpfseitigen Ende 34 gegenüber liegt, ist die Gasfeder 32 an der Rotorkopfbrücke 28 befestigt.

Die Gasdruckfeder 32 besitzt einen rotorseitigen Druckluftanschluss 38 zu einem Zylinder 40 der Gasdruckfeder 32. Im Zylinder 40 läuft ein Kolben 42, der an einer Kolbenstange 44 befestigt ist. Der Kolben 42 teilt den Zylinder 40 in ein oberes Teilvolumen 46 und ein unteres Teilvolumen 48. Der rotorseitige Druckluftanschluss 38 steht in Verbindung mit dem oberen Teilvolumen 46.

An den rotorseitigen Druckluftanschluss 38 ist eine Druckleitung 50 angeschlossen, die zu einem Gasbehälter 52 führt. Die Druckleitung 50 und der Gasbehälter 52 bilden einen Gasspeicher 53.

Der Gasbehälter 52 hat ein Gasbehälter-Volumen V52, das sich mit einem Leitungs-Volumen V50 zum Speichervolumen Vs des Gasspeichers 53 addiert. Die Gasdruckfeder 32 hat ein Federvolumen $V_F$, das im vorliegenden Fall theoretisch maximal 45 Kubikzentimeter beträgt. Relevant ist jedoch insbesondere der Hub, der im Betrieb bei gleichbleibender Trimmung auftritt. Dieses Federvolumen beträgt beispielsweise 22,5 Kubikzentimeter. Das Speichervolumen beträgt bei dem vorliegenden Tragschrauber $V_S$ = 250 ml. Das Speichervolumen ist im vorliegenden Fall damit um mehr als den Faktor zehn größer als das Federvolumen, was eine bevorzugte Ausführungsform darstellt.

Die Gasdruckfeder 32, der Gasbehälter 52 und die Druckleitung 50 sind Teil eines Gasfedersystems 54. Das Gasfedersystem 54 umfasst in der vorliegenden Ausführungsform eine Druckgasquelle 56 in Form eines Kompressors 56, der in Figur 2 lediglich schematisch eingezeichnet ist und von einem Motor 58 (vgl. Figur 1) angetrieben ist. Der Motor 58 ist mit dem Propeller 14 zum Antreiben verbunden.

In einer Leitung 60 zwischen dem Kompressor 56 und dem Gasbehälter 52 ist ein Rückschlagventil 62 angeordnet, so dass der Kompressor 56 nur dann mit Antriebsenergie beaufschlagt werden muss, wenn ein Gasdruck p im Gasbehälter 52 und damit im oberen Teilvolumen 46 des Zylinders 40 verändert werden muss. In anderen Worten entspricht der Gasdruck p im Gasbehälter 52 dem Federdruck p in der Gasdruckfeder 32.

Das Gasfedersystem 54 besitzt zudem ein Ablassventil 64, mittels dem Luft aus dem Gasbehälter 52 abgelassen werden kann. Auf diese Weise kann der Federdruck p gesenkt werden. Der Kompressor 56 sowie das Ablassventil 54 können über zugeordnete Bedienelemente 66, 68, die in einem Cockpit 70 (vgl. Figur 1) des Tragschraubers 10 angeordnet sind, betätigt werden. Der Pilot kann daher aus dem Cockpit heraus den Federdruck p erhöhen und senken.

Es ist zudem möglich, dass das Gasfedersystem 54 eine Druckanzeige 72 aufweist, die mit einem Drucksensor 74 verbunden ist, der den Federdruck p im Gasbehälter 52 misst. der Pilot kann dann im Cockpit den jeweils herrschenden Gasdruck p überwachen.

Die Gasdruckfeder 32 besitzt einen rumpfseitigen Druckluftanschluss 76, der mittels einer Druckluftleitung 78 über ein Drei-Wege-Ventil 80 mit dem Kompressor 56 verbindbar ist. Mittels des Drei-Wege-Ventils kann damit ein Gegendruck im unteren Teilvolumen 48 erhöht werden, indem der rumpfseitige Druckluftanschluss 76 mit dem Kompressor 56 verbunden wird. Durch Umschalten des Drei-Wege-Ventils 80 kann das Umverteilvolumen 48 entlüftet werden, so dass es druckfrei ist.

Wird das untere Teilvolumen 48 mit Druckluft beaufschlagt und das obere Teilvolumen 46 entlüftet, so drückt die Kolbenstange 44 einen Bremsklotz 82 gegen einen Zahnkranz 84 des Teeter-Towers 18, so dass eine Drehbewegung des Rotors 12 abgebremst werden kann. Der Zahnkranz 84 dient zum Vorrotieren des Rotors 12.

Der Kompressor 56, das Ablassventil 64 und die Bedienelemente 66 und 68 sind Teil einer Druckeinstellvorrichtung 86, mittels der der Gasdruck p eingestellt werden kann. Der Gasdruck p ist identisch mit einem Federdruck, der in dem oberen Teilvolumen 46 des Zylinders 40 herrscht.

Figur 1 zeigt schematisch, dass der Gasbehälter 52 innerhalb einer Verkleidung 88 des Tragschraubers 10 angeordnet ist, so dass er vor direkter Sonneneinstrahlung geschützt ist. Es ist jedoch auch möglich, den Gasbehälter 52 außerhalb der Verkleidung 88 anzuordnen.

**Bezugszeichenliste**

| | | | |
|---|---|---|---|
| 10 | Tragschrauber | 60 | Leitung |
| 12 | Rotor | 62 | Rückschlagventil |
| 14 | Propeller | 64 | Ablassventil |
| 16 | Rotorblatt | 66 | Bedienelement |
| 18 | Teeter-Tower | 68 | Bedienelement |
| 20 | Rumpf | 70 | Cockpit |
| 22 | Fahrwerk | 72 | Druckanzeige |
| 24 | Heckleitwerk | 74 | Drucksensor |
| 26 | Rotorkopf | 76 | rumpfseitiger Druckluftanschluss |
| 28 | Rotorkopfbrücke | 78 | Druckluftleitung |
| 30 | Rotorkopfbasis | 80 | Drei-Wege-Ventil |
| 32 | Gasdruckfeder | 82 | Bremsklotz |
| 34 | rumpfseitiges Ende | 84 | Zahnkranz |
| 36 | rotorseitiges Ende | 86 | Druckeinstellvorrichtung |

(fortgesetzt)

| | | | |
|---|---|---|---|
| 38 | rotorseitiger Druckluftanschluss | 88 | Verkleidung |
| 40 | Zylinder | $D_{10}$ | Rotorblatt-Drehachse |
| 42 | Kolben | $D_{12}$ | Rotor-Drehachse, Querachse |
| 44 | Kolbenstange | $V_{52}$ | Gasbehälter-Volumen |
| 46 | oberes Teilvolumen | $V_{50}$ | Leitungs-Volumen |
| 48 | unteres Teilvolumen | $V_P$ | Federvolumen |
| | | p | Federdruck, Gasdruck |
| 50 | Druckluftleitung | | |
| 52 | Gasbehälter | | |
| 53 | Gasspeicher | | |
| 54 | Gasfedersystem | | |
| 56 | Kompressor | | |
| 58 | Motor | | |

**Patentansprüche**

1. Tragschrauber mit

   (a) einem Rotor (12) und
   (b) einer Gasdruckfeder (32), die angeordnet ist zum Trimmen des Rotors (12) um seine Querachse ($D_{12}$), wobei die Gasdruckfeder (32) ein Federvolumen ($V_p$) hat,
   **gekennzeichnet durch**
   (c) einen Gasspeicher (53), der mit der Gasdruckfeder (32) verbunden ist und ein Speichervolumen ($V_S$) hat, das größer ist als das Federvolumen ($V_p$).

2. Tagschrauber nach Anspruch 1, **dadurch gekennzeichnet, dass**

   (a) die Gasdruckfeder (32)

   - den Zylinder (40),
   - einen Kolben (42),
   der im Zylinder (40) läuft und
   im Zylinder (40) ein oberes Teilvolumen (46) und ein unteres Teilvolumen (48) voneinander trennt, und
   - eine Kolbenstange (44), die am Kolben (42) befestigt ist, aufweist, und

   (b) der Gasspeicher (53) so mit der Gasdruckfeder (32) verbunden ist, dass er mit dem oberen Teilvolumen (46), nicht aber dem unteren Teilvolumen (48), kommuniziert.

3. Tragschrauber nach einem der vorstehenden Ansprüche, **dadurch gekennzeichnet, dass**

   - der Gasspeicher (53) einen Gasbehälter (52) mit einem Gasbehälter-Volumen ($V_{52}$) umfasst und
   - das Gasbehälter-Volumen ($V_{52}$) größer ist als das Federvolumen ($V_p$), insbesondere größer als das Fünffache des Federvolumens ($V_p$).

4. Tragschrauber nach Anspruch 3, **dadurch gekennzeichnet, dass** der Gasspeicher (53) so mit der Gasdruckfeder (32) verbunden ist, dass der Gasdruck im Gasspeicher (53) über eine Verbindung zu einem Zylinder (40) der Gasdruckfeder (32) geleitet wird, so dass es zu einem Druckausgleich kommt.

5. Tragschrauber nach einem der vorstehenden Ansprüche, **dadurch gekennzeichnet, dass** der Gasbehälter (52) innerhalb einer Verkleidung des Tragschraubers (10) angeordnet ist.

6. Tragschrauber nach einem der vorstehenden Ansprüche, **gekennzeichnet durch** eine Druckeinstellvorrichtung (86), mittels der der Federdruck (p) in der Gasdruckfeder (32) einstellbar ist.

7. Tragschrauber nach Anspruch 6, **dadurch gekennzeichnet, dass** die Druckeinstellvorrichtung (86) eine Druckgasquelle (56), insbesondere einen Kompressor (56), aufweist zum Erzeugen von Druckluft, die zum Einstellen des Federdrucks (p) in der Gasdruckfeder (32) mit der Gasdruckfeder (32) verbunden ist.

**Claims**

1. An autogyro with

   (a) a rotor (12) and
   (b) a gas pressure spring (32), which is arranged to trim the rotor (12) about its transverse axis ($D_{12}$), wherein the gas pressure spring (32) has a spring volume ($V_p$),
   **characterised by**
   (c) a gas storage facility (53) that is connected to the gas pressure spring (32) and has a storage volume ($V_S$), which is greater than the spring volume ($V_p$).

2. The autogyro according to claim 1, **characterised by** the fact that

   (a) the gas pressure spring (32) comprises

      - a cylinder (40),
      - a piston (42),
      that runs inside the cylinder (40) and
      within the cylinder (40), separates an upper partial volume (46) and a lower partial volume (48) from one another, and
      - a piston rod (44) that is fixed to the piston (42), and that

   (b) the gas storage facility (53) is connected to the gas pressure spring (32) such that it communicates with the upper partial volume (46), but not with the lower partial volume (48).

3. The autogyro according to one of the above claims, **characterised by** the fact that

   - the gas storage facility (53) comprises a gas container (52) with a gas container volume (V52), and
   - the gas container volume ($V_{52}$) is greater than the spring volume ($V_p$), in particular greater than five times the spring volume ($V_p$).

4. The autogyro according to claim 3, **characterised by** the fact that the gas storage facility (53) is connected with the gas pressure spring (32) in such a way that the gas pressure in the gas storage facility (53) is directed via a connection to a cylinder (40) of the gas pressure spring (32) so that a pressure compensation occurs.

5. The autogyro according to one of the above claims, **characterised by** the fact that the gas container (52) is arranged inside a casing of the autogyro (10).

6. The autogyro according to one of the above claims, **characterised by** a pressure adjustment device (86), by means of which the spring pressure (p) in the gas pressure spring (32) can be adjusted.

7. The autogyro according the claim 6, **characterised by** the fact that the pressure adjustment device (86) has a compressed gas source (56), especially a compressor (56), for generating compressed air that is connected with the gas pressure spring (32) for adjusting the spring pressure (p) in the gas pressure spring (32).

**Revendications**

1. Autogire comportant

   (a) un rotor (12) et
   (b) un ressort pneumatique à gaz (32) qui est agencé pour ajuster le rotor (12) autour de son axe transversal ($D_{12}$), le ressort pneumatique à gaz (32) présentant un volume de ressort ($V_P$),

**caractérisé par**

(c) un réservoir de gaz (53) qui est relié au ressort pneumatique à gaz (32) et qui présente un volume de réservoir ($V_S$) qui est supérieur au volume de ressort ($V_P$).

2. Autogire selon la revendication 1,
   **caractérisé en ce que**

   (a) le ressort pneumatique à gaz (32) comprend

   - le cylindre (40),
   - un piston (42)
   qui se déplace dans le cylindre (40) et
   qui sépare dans le cylindre (40) un volume partiel supérieur (46) et un volume partiel inférieur (48), et
   - une tige de piston (44) qui est fixée au piston (42),
   et

   (b) le réservoir de gaz (53) est relié au ressort pneumatique à gaz (32) de manière à communiquer avec le volume partiel supérieur (46), mais non pas avec le volume partiel inférieur (48).

3. Autogire selon l'une des revendications précédentes, **caractérisé en ce que**

   - le réservoir de gaz (53) comprend un récipient à gaz (52) présentant un volume de récipient à gaz ($V_{52}$), et
   - le volume de récipient à gaz ($V_{52}$) est supérieur au volume de ressort ($V_P$), en particulier supérieur à cinq fois le volume de ressort ($V_P$).

4. Autogire selon la revendication 3, **caractérisé en ce que** le réservoir de gaz (53) est relié au ressort pneumatique à gaz (32) de telle sorte que la pression de gaz dans le réservoir de gaz (53) est amenée à un cylindre (40) du ressort pneumatique à gaz (32) par une liaison, de manière à établir une compensation de pression.

5. Autogire selon l'une des revendications précédentes, **caractérisé en ce que** le récipient à gaz (52) est agencé à l'intérieur d'un habillage de l'autogire (10).

6. Autogire selon l'une des revendications précédentes, **caractérisé par** un dispositif de réglage de pression (86) au moyen duquel la pression de ressort (p) dans le ressort pneumatique à gaz (32) est réglable.

7. Autogire selon la revendication 6, **caractérisé en ce que** le dispositif de réglage de pression (86) comprend une source de gaz sous pression (56), en particulier un compresseur (56), pour générer de l'air comprimé, qui est relié au ressort pneumatique à gaz (32) pour régler la pression de ressort (p) dans le ressort pneumatique à gaz (32).

Fig. 1

EP 3 177 526 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040278 A1
- DE 102009015806 A1
- US 20040232280 A1
- US 7490792 B1
- GB 2280412 A
- GB 2276958 A